# EUROPEAN PATENT APPLICATION

(11) **EP 4 723 574 A1**
(43) Date of publication of application: **08.04.2026**
(21) Application number: 25203343.6
(22) Date of filing: 19.09.2025
(51) Int. Cl.: H04L 41/14, H04L 43/08, H04L 43/50

(54) **SYSTEM AND METHOD FOR TELEMETRY LOAD TESTING TO CONFIRM CAPABILITIES OF DISTRIBUTED SYSTEM**

(30) Priority: 01.10.2024 US 202418903357
(71) Applicant: Otis Elevator Company, Farmington, Connecticut 06032 (US)
(72) Inventor: Balasubramaniam, Senthilnathan, Farmington, CT, 06032 (US); Rao, Sanjithraj, Farmington, CT, 06032 (US); Nanjappan, Ezhil, Farmington, CT, 06032 (US)
(74) Representative: Schmitt-Nilson Schraud Waibel Wohlfrom Patentanwälte Partnerschaft mbB

(57) **Abstract**

A system configured for simulating communication loads over a network, the system having: a controller module; an application module, operationally coupled over the network to the controller module, wherein the system is configured to execute a load test over the network with the application module, by: transmitting mock telemetry messages, associated with mock devices, representing internet-of-things (IoT) devices, to the application module, wherein the mock telemetry messages are equivalent to production telemetry messages sent from the IoT devices; and issuing an alert when the system determines that a result of the load test is indicative of errors above a threshold associated with receipt of the mock telemetry messages by the application module.

## Description

The embodiments described herein are directed to a distributed system and more specifically to a system and method for telemetry load testing to confirm capabilities of a distributed system.

A distributed network of elevators and escalators and moving walkways may have more than a half of million devices that send health reports in the form of telemetry messages to an internet of things (IoT) application hosted on a cloud service. The devices may also interact in other ways with the cloud service, including requesting updates, voice communications, etc., from the cloud service. The IoT applications at the host process data in the messages and update the device health, performance (i.e., availability or connectivity) and maintenance status, and identify alarm conditions (in case of an operational anomaly) for a front-end application for the mechanics to review. Often, code updates, as one non-limiting example, of transmitted data, may need to be rolled out to such devices. Depending on communications traffic and system capabilities, there may be optimal or suboptimal timeframes for performing such activities because of potentially overwhelming the network.

Disclosed is a system configured for simulating communication loads over a network, the system including: a controller module; an application module, operationally coupled over the network to the controller module, wherein the system is configured to execute a load test over the network with the application module, by: transmitting mock telemetry messages, associated with mock devices, representing internet-of-things (IoT) devices, to the application module, wherein the mock telemetry messages are equivalent to production telemetry messages sent from the IoT devices; and issuing an alert when the system determines that a result of the load test is indicative of errors above a threshold associated with receipt of the mock telemetry messages by the application module.

Particular embodiments further may include at least one, or a plurality of, the following optional features, alone or in combination with each other:

In addition to one or more aspects of the system or as an alternate, the controller module identifies errors by determining that one or more of the mock telemetry messages failed to reach the application module or that mock telemetry data in one or more of the mock telemetry messages is inaccurate.

In addition to one or more aspects of the system or as an alternate,: prior to transmitting the mock telemetry messages, the system is configured to generate the mock devices and register the mock devices with the application module; and the controller module is configured to determine the result of the load test is indicative of errors by reviewing reports generated from telemetry metrics, derived from telemetry logs received from the application module, wherein the telemetry logs identify the mock devices and associated ones of the mock telemetry messages received with the mock devices.

In addition to one or more aspects of the system or as an alternate, the devices are elevator cars, escalators or movable walkways.

In addition to one or more aspects of the system or as an alternate,, each one of mock telemetry messages contains mock telemetry data that identifies one of the mock devices associated with the one of the mock telemetry messages and a mock operational state of the one of the mock devices.

In addition to one or more aspects of the system or as an alternate, the system is configured to: receive input that includes load test parameters; and perform the load test from the load test parameters.

In addition to one or more aspects of the system or as an alternate, the load test parameters identifies one or more of: a date and time to start the load test; a duration for executing the load test; a subgroup of the mock devices for generating the load test; and the mock telemetry data to include in the mock telemetry messages.

In addition to one or more aspects of the system or as an alternate, the subgroup of the mock devices is selected based on one or more of a device type and a device location.

In addition to one or more aspects of the system or as an alternate, the system is configured to: periodically retrieve a production telemetry metrics, representing a production load from a predetermined prior timeframe; and perform the load test from the production telemetry metrics.

In addition to one or more aspects of the system or as an alternate, the system performs the load test by: generating the mock devices representing the IoT devices that transmitted the production telemetry messages during the prior timeframe; generating the mock telemetry messages representing the production telemetry messages generated by the IoT devices during the prior timeframe; and transmitting the mock telemetry messages to the application module.

Disclosed is a method for simulating communication loads over a network, the method including: a controller module executing a load test, by: transmitting mock telemetry messages, associated with mock devices, representing internet-of-things (IoT) devices to an application module that is operationally coupled over the network to the controller module, wherein the mock telemetry messages are equivalent to production telemetry messages sent from the IoT devices; and issuing an alert when the system determines that a result of the load test is indicative of errors above a threshold associated with receipt of the mock telemetry messages by the application module.

Particular embodiments further may include at least one, or a plurality of, the following optional features, alone or in combination with each other:

In addition to one or more aspects of the method or as an alternate, the method includes identifying, by the system, errors by determining that one or more of the mock telemetry messages failed to reach the application module or that mock telemetry data in one or more of the mock telemetry messages is inaccurate.

In addition to one or more aspects of the method or as an alternate, the method includes: prior to transmitting the mock telemetry messages, generating, by the system, the mock devices and registering the mock devices with the application module; and determining the result of the load test is indicative of errors by reviewing reports generated from mock telemetry metrics, derived from telemetry logs received from the application module, wherein the telemetry logs identify the mock devices and associated ones of the mock telemetry messages received with the mock devices.

In addition to one or more aspects of the method or as an alternate, the IoT devices are elevator cars, escalators or movable walkways.

In addition to one or more aspects of the method or as an alternate, the method includes generating, by the system, for each one of mock telemetry messages, mock telemetry data that identifies one of the mock devices associated with the one of the mock telemetry messages and a mock operational state of the one of the mock devices.

In addition to one or more aspects of the method or as an alternate, the method includes the system: receiving input that includes load test parameters; and performing the load test from the load test parameters.

In addition to one or more aspects of the method or as an alternate, the load test parameters identifies one or more of: a date and time to start the load test; a duration for executing the load test; a subgroup of the mock devices for the load test; and the mock telemetry data to include in the mock telemetry messages.

In addition to one or more aspects of the method or as an alternate, the subgroup of the devices is selected based on one or more of a device type and a device location.

In addition to one or more aspects of the method or as an alternate, the method includes the system: periodically retrieving a production telemetry metrics representing a production load from a predetermined prior timeframe; and performing the load test from the production telemetry metrics.

In addition to one or more aspects of the method or as an alternate, the method includes the system performing the load test by: generating the mock devices representing the IoT devices that transmitted the production telemetry messages during the prior timeframe; generating the mock telemetry messages representing the production telemetry messages generated by the IoT devices during the prior timeframe; and transmitting the mock telemetry messages to the application module.

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows components of a distributed network of elevator cars connected to a cloud service according to an embodiment;
FIG. 3 shows additional components of a distributed network of elevator cars connected to a cloud service according to an embodiment, where the illustrated system components enable load testing of the network;
FIG. 4 is a detailed flowchart showing a method of executing a load test of the network based on a user request;
FIG. 5 is a flowchart showing a method of automatically executing a load test of the network;
FIG. 6 is a flowchart generally showing the method shown in FIG. 4; and
FIG. 7 is a flowchart generally showing the method shown in FIG. 5.

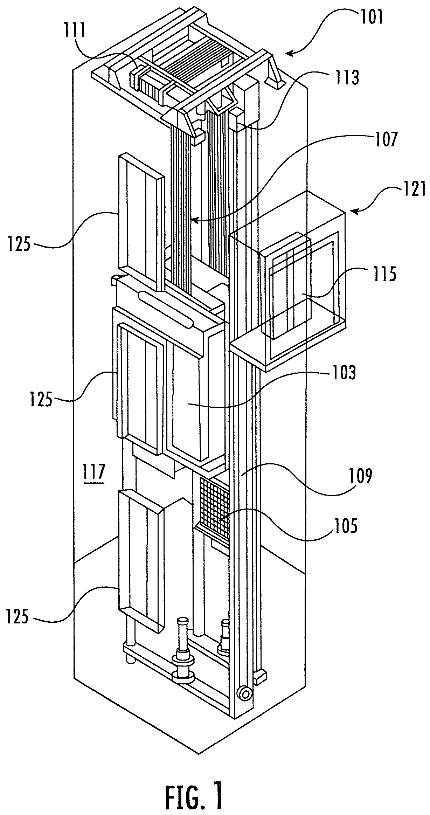

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

Though elevator systems are disclosed in depth herein as a nonlimiting example, the present disclosure is equally applicable to other forms of passenger conveyor systems. Passenger conveyor systems include moving walkways and escalators and other automated people movers as nonlimiting alternatives to elevator systems, all of which move people between and along different levels in a building.

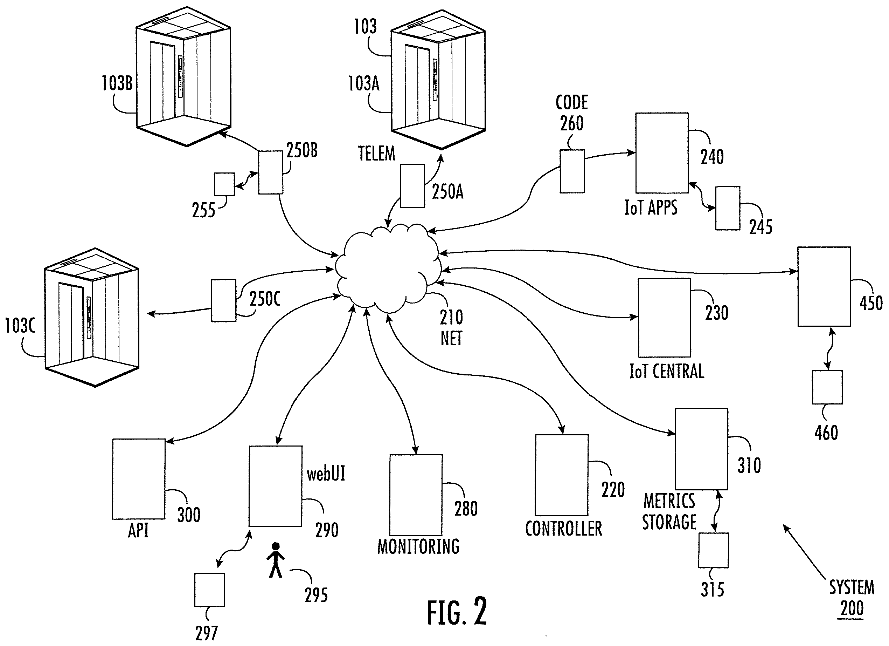

Turning to FIG. 2, disclosed is a distributed (e.g., cloud) system 200. While various modules are illustrated for performing discrete functions in FIG. 2, it is to be appreciated that two or more of the functions may be combined into a common module or alternatively the functions may be further divided into additional modules.

The system 200 includes a network 210 which may be a wide area network such as the internet. Devices 103A-103C (generally 103), which may be elevator cars, moving walkways or the like, as nonlimiting embodiments, , may be IoT (internet of things) devices, i.e., devices operationally coupled over the internet. The system 200 may have a controller module (or service) 220, an IoT central module 230 or similar platform, and an IoT application and data storage module 240 (for simplicity an application module or an IoT app module 240). The IoT central module 230 is a known IoT application platform as a service (aPaaS) with user-engageable dashboards that centralizes device data, allows for data-driven workflows, and the creation of custom apps.

IoT app module 240 is utilized for storage and other processes running in a cloud service. The message come from the devices 103 (e.g., in a raw format pr as processed data, as nonlimiting examples) and are extracted, transformed into a readable/storable format and loaded onto databases for the front end applications to consume and publish. The control module 220 instructs the IoT central module 230 to register the devices 103 with the IoT app module 240 to enable the IoT app module 240 to receive telemetry messages 250A-250C (generally 250) from the devices 103 and to transmit code 260, such as updates, to the devices 103. The devices 103 may also interact in other ways with each other and the cloud, e.g., to request updates, voice communications, etc.

The IoT app module 240 may generate logs 245, daily, indicative of received telemetry messages 250 and transmitted code 260. A monitor and capture metrics module (for simplicity, a monitoring module) 280 may monitor the logs generated by the IoT app module 240. The logs 245 may be forwarded to a metrics storage module 310 where telemetry metrics data 315 is derived from the logs 245. A query module 450 may generate reports 320 from the telemetry metrics data 315, which may be viewable via a performance dashboard 297 accessible via a web interface module 290. With this configuration, errors in the communications can be identified by a user 295 who may be a technician. The user may engage an API module (or gateway) 300 to adjust operational parameters of the control module 220.

There may be hundreds of thousands of the devices 103, each sending production (e.g., actual) telemetry messages 250 to the IoT app module 240, each message related to different aspects of the devices 103, such as the operational condition of the breaks, doors, etc., throughout the day. The IoT app module 240 may need to periodically send code 260 to each of the devices 103. It can be appreciated that network traffic, especially during high-traffic periods, e.g., when the devices 103 are being heavily used, a significant load of telemetry messages 250 may be transmitted to the IoT app module 240. As discussed in greater detail below, the disclosed system 200 is configured to confirm the IoT app module 240 is reliably receiving the telemetry messages 250 and that it may continue to do so when also required to circulate code 260 without experiencing errors that are above a threshold level. Errors may be in the form of dropped telemetry messages 250, inaccurately processed telemetry data 255 in the telemetry messages 250, bottlenecking that results excessive latency and response time, as nonlimiting examples.

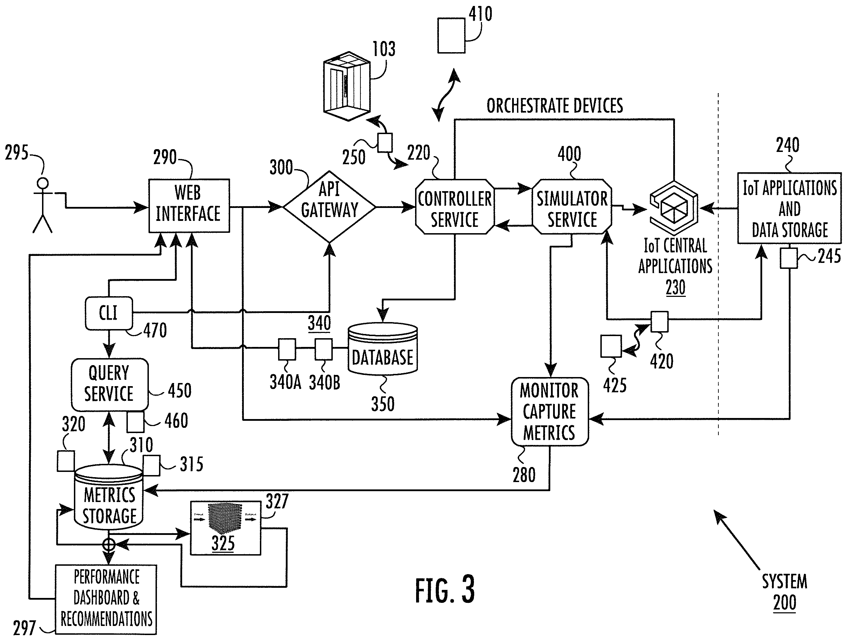

Turning to FIG. 3, additional aspects of the disclosed embodiments are shown. While various modules are illustrated for performing discrete functions in FIG. 3, it is to be appreciated that two or more of the functions may be combined into a common module or alternatively the functions may be further divided into additional modules.

The figure shows the user 295 that engages the web interface module 290 to communicate with the controller module 220 via the API module 300 and to view the performance dashboard 297. The IoT central module 230 is shown that registers the devices 103 with the IoT app module 240. The registration establishes trust in device connectivity and allows messages to traverse between devices and the cloud in both directions, i.e., device to cloud and cloud to device, according to predefined load scenarios. The monitoring module 280 is shown that may monitor telemetry logs 245 generated by the IoT app module 240. The metrics storage module 310 and query module 450 are shown, which generate telemetry metrics data 315 and reports 320 from the telemetry metrics data 315, which may be stored on the metrics storage module 310 and visualized on a performance dashboard 297 over the web interface module 290 to identify errors logged over the past day (as an example) at the IoT app module 240. The reports 320 may include recommendations on remedying issues identified in the telemetry logs 245, e.g., applying a machine learning model 325, which may be within an AI module 327 or in one of the identified modules.

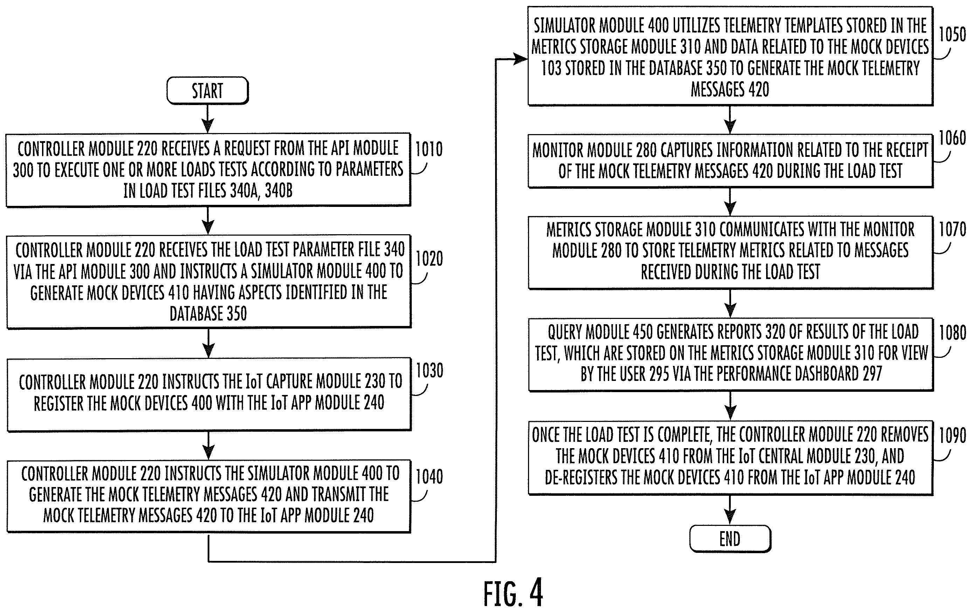

With reference to FIGS. 3 and 4, in one embodiment, as shown in block 1010, the controller module 220 receives a request from the API module 300 following engagement of the user 295 with the web interface module 290 to execute one or more loads tests according to parameters in load test files 340A, 340B (generally 340). The load test files 340 may be stored in a database 350 that is operationally coupled to the controller module 220. Parameters of the load test files 340 may include a test start date and time, and duration, e.g., an hour, a day, a week. When more than one load test file 340 is selected, the parameters may include a sequence for executing the load tests and a time interval between the load tests. For each test, the longer the duration, the more likely errors will be identified.

Parameters of the load test parameter file 340 may also identify categories of devices that may send telemetry messages throughout the load test. Such categories may include the devices 103 of a particular model, devices 103 that are running particular versions of controller code, or devices 103 that are located in a particular building or geographic region. Parameters of the load test parameter file 340 may identify types of telemetry messages 250 that the devices may send during the test period. Further, parameters of the load test parameter file 340 may identify different communication protocols utilized by the devices 103. That is, the API module 330 may provide a RESTful endpoint for the user 295 to configure the simulation parameters, to start and stop the simulation, to add and remove mock devices. As is known in the art, RESTful is an architectural style for an application programming interface (API) that uses HTTP (hypertext transfer protocol) requests to access and use data.

As shown in block 1020, the controller module 220 receives the load test parameter file 340 via the API module 300 and instructs a simulator module 400 to generate mock devices 410 having aspects identified in the database 350. Each of the mock devices 410 is equivalent to one of the actual or production devices 103.

As shown in block 1030, the controller module 220 instructs the IoT central module 230 to register the mock devices 410 with the IoT app module 240. This enables the IoT app module 240 to receive mock telemetry messages 420, having mock telemetry data 425, generated by the simulator module 400. That is, devices, actual devices 103 or mock devices 410, are registered with the IoT app module 240 before the IoT app module 240 will accept related telemetry messages.

As shown in block 1040, the controller module 220 also instructs the simulator module 400 to generate the mock telemetry messages 420 and transmit the mock telemetry messages 420 to the IoT app module 240. As shown in block 1050, the simulator module 400 utilizes telemetry templates (e.g., data formatting structure, such as a table format) 460 stored in the metrics storage module 310 and data related to the mock devices 103 stored in the database 350 to generate the mock telemetry messages 420. The telemetry templates 460 were generated by the query module 450 based on telemetry metrics data 315 captured over, e.g., the prior day by the IoT app module 240, which were monitored by the monitoring module 280, and stored in the metrics storage module 310.

As shown in block 1060, the monitoring module 280 captures information related to the receipt of the mock telemetry messages 420 during the load test. As shown in block 1070, the metrics storage module 310 communicates with the monitoring module 280 to store telemetry metrics related to messages received during the load test. As shown in block 1080, the query module 450 generates reports 320 of results of the load test, which are stored on the metrics storage module 310 for view by the user 295 via the performance dashboard 297. The reports 320 may include recommendations on remedying issues identified in the telemetry logs 245, e.g., applying a machine learning model 325, which may be within an AI module 327 or in one of the identified modules. The recommendations, e.g., may identify optimal periods for circulating code 260 to the devices 103 (FIG. 2) based on trends.

As shown in block 1090, once the load test is complete, the controller module 220 may remove the mock devices 410 from the IoT central module 230, and de-register the mock devices 410 from the IoT app module 240.

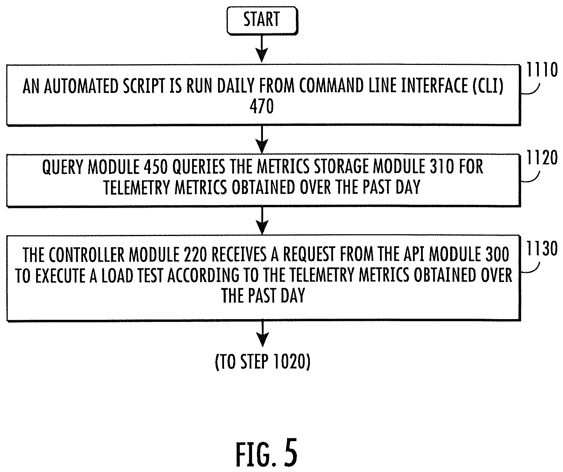

With reference to FIGS. 3 and 5, in one embodiment, rather than having a user 295 select load test files 340 and related parameters to perform the load test, the system 200 is configured for executing automatic load simulations to mimic the production telemetry load from the connected devices 103. As shown in block 1110, an automated script is run daily from command line interface (CLI) 470, modifiable by the user 295 via the web interface module 290. As shown in block 1120, the script causes the query module 450 to query the metrics storage module 310 for telemetry metrics obtained over the past day, as one non-limiting interval of time, which may be modified to any other desired interval, which were obtained from the monitoring module 280 utilizing the telemetry logs 245. As shown in block 1130, the controller module 220 receives a request from the API module 300 to execute a load test according to the telemetry metrics obtained over the past day. The remining steps are the same as blocks 1020-1090, with the telemetry metrics data 315 from the prior day being utilized in place of the parameters for the load test that were obtained at block 1010. The results of the test may be compared with the prior results to identify changes in the success rate and the failure rate and the performance of the applications, and identify usage trends, which may be utilized to identify solutions to issues or optimal times to update code.

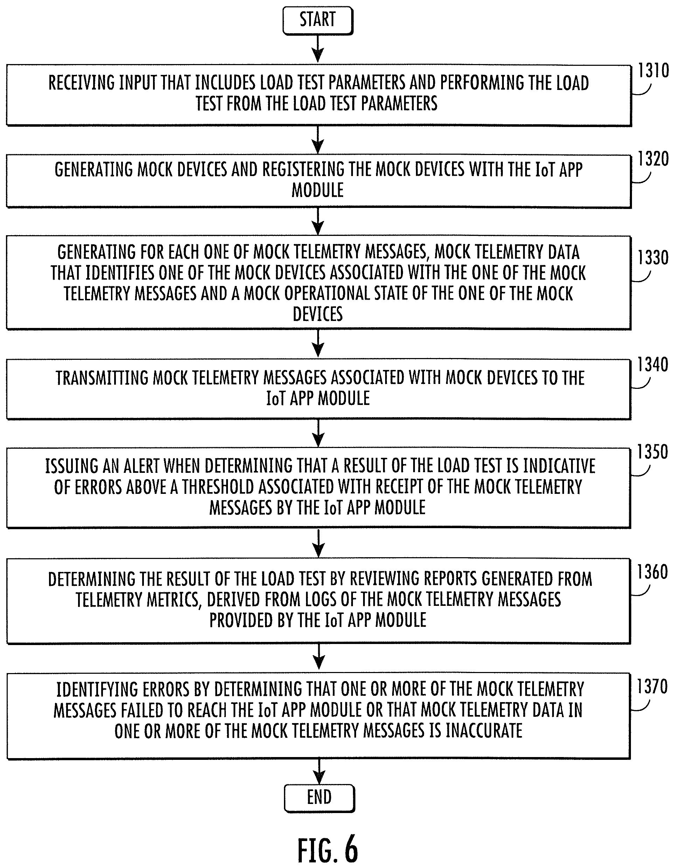

Turning to FIG. 6, a flowchart shows the method for simulating device loads on devices 103 connected over a distributed network 210. The illustrated method is a more generalized representation of the steps in FIG. 4. As shown in block 1310, the method includes the system 200 executing a load test by receiving input, e.g., in part from a user 295, that includes load test parameters and performing the load test from the load test parameters. The load test parameters identify one or more of a date and time to start the load test, a duration for executing the load test, a subgroup of the devices 103 for generating the mock devices 410 for the load test and the mock telemetry data 425 to include in the mock telemetry messages 420. The subgroup of the devices 103 is selected based on one or more of a device type, a device location and a version of code on the device. Device information relating to the mock devices 410 may be obtained from the database 350, indicated above.

As shown in block 1320, the method includes generating, by the system 200, mock devices 410 and registering the mock devices 410 with the IoT app module 240. As shown in block 1330, the method includes generating, by the system 200, for each one of mock telemetry messages 420, mock telemetry data 425 that identifies one of the mock devices 410 associated with the one of the mock telemetry messages 420 and a mock operational state of the one of the mock devices 410. Templates 460 for the mock telemetry messages 420 may be obtained from the metrics storage module 310 as indicated above.

As shown in block 1340, the load test includes transmitting, by the system 200, mock telemetry messages 420 associated with mock devices 410, correlating with the connected devices 103, to the IoT app module 240. The IoT app module 240 is operationally coupled over the network 210 to the controller module 220 and the connected devices 103. The IoT app module 240 stores data and code 260 associated with the connected devices 103. The mock telemetry messages 420 are equivalent to production telemetry messages 250 sent from the connected devices 103.

As shown in block 1350, the method includes the system 200 issuing an alert upon determining that a result of the load test is indicative of errors above a threshold associated with receipt of the mock telemetry messages 420 by the IoT app module 240. As shown in block 1360, the method includes determining the result of the load test is indicative of errors by reviewing reports generated from telemetry metrics data 315, which were derived from logs 245 of mock telemetry messages 420 received by the IoT app module 240. The telemetry log 245 identifies the mock devices 410 and associated ones of the mock telemetry messages 420 received with the mock devices 410. As shown in block 1370, the step of issuing the alert includes identifying errors by determining that one or more of the mock telemetry messages 420 failed to reach the IoT app module 240 or that mock telemetry data 425 in one or more of the mock telemetry messages 420 is inaccurate.

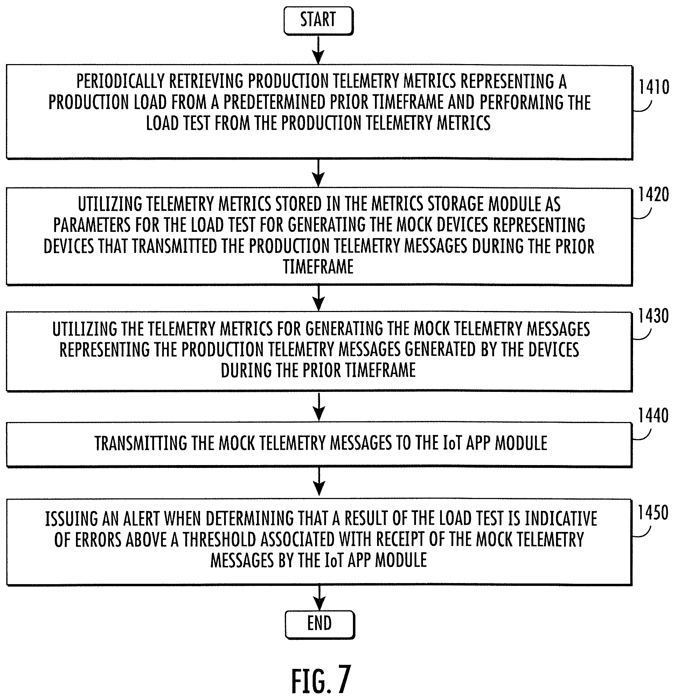

Turning to FIG 7. another flowchart shows a method for simulating device loads on devices 103 connected over the distributed network 210. The illustrated method is a more generalized representation of the steps in FIG. 5. As with FIG. 5, those steps in FIG. 7 that are the same as steps in FIG. 6 are omitted for brevity.

As shown in block 1410, the method includes the controller module 220, operationally coupled over the network 210 to the connected devices 103, executing a load test by periodically retrieving telemetry metrics data 315 representing a production load from a predetermined prior timeframe and performing the load test from the telemetry metrics data 315 from production telemetry messages 250. As shown in block 1420, the method includes the system 200 utilizing the telemetry metrics data 315 stored in the metrics storage module 310 as parameters for the load test for generating the mock devices 410 representing devices 103 that transmitted the production telemetry messages 250 during the prior timeframe. As indicated, the telemetry metrics data 315 were generated from the telemetry logs 245 of telemetry messages 250 issued from actual devices 103 during the prior day. The logs 245 were obtained by the monitoring module 280, communicating with the IoT app module 240.

Specifically, as shown in block 1430, the telemetry metrics data 315 are utilized for generating the mock telemetry messages 420 representing the production telemetry messages 250 generated by the devices 103 during the prior timeframe (e.g., day). As shown in block 1440, the method includes the system 200 transmitting the mock telemetry messages 420 to the IoT app module 240. As shown in block 1450, the method includes issuing an alert when the system 200 determines that a result of the load test is indicative of errors above a threshold associated with receipt of the mock telemetry messages 420 by the IoT app module 240.

The embodiments therefore provide a system that tracks the daily (or other period) production trends over a distributed network and simulates a similar, i.e., mock, production load in a performance environment. The system is configured for simulating millions of mock (virtual) devices. The mock load includes a same number of devices, volume of telemetry messages, over a same duration as the messages were sent during the production load. The system may receive user input to initiate communication between the connected device and IoT solutions. The system is configured to mimic a connection of connected or production (i.e., real-life) devices to cloud telemetry, to support load engineering tests for IoT solutions. The system replicates the generation and publishing of telemetry messages, mimicking those originating from connected devices. This enables the validation of the installation application solutions, such as update code, under varying loads. The system is configured to generate comprehensive reports that confirm system performance through a CI/CD (continuous integration and continuous deployment) pipeline. That is, the system enables a determination as to whether code deployment will be successful in view of the production loads. For example, a benefit of the system is replicating device-to-cloud loads akin to production environments for code builds destined for deployment. Consequently, code releases undergo testing in an environment where infrastructure and load conditions remain relatively consistent.

Wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same. For example, the device gateway of the disclosed embodiments uses cellular networks to communicate wirelessly with cell towers, enabling voice calls, text messaging, and data transmission.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radiofrequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A system configured for simulating communication loads over a network, the system including:
a controller module;
an application module, operationally coupled over the network to the controller module,
wherein the system is configured to execute a load test over the network with the application module, by:
transmitting mock telemetry messages, associated with mock devices, representing internet-of-things (IoT) devices, to the application module, wherein the mock telemetry messages are equivalent to production telemetry messages sent from the IoT devices; and
issuing an alert when the system determines that a result of the load test is indicative of errors above a threshold associated with receipt of the mock telemetry messages by the application module.

2. The system of claim 1, wherein the controller module identifies errors by determining that one or more of the mock telemetry messages failed to reach the application module or that mock telemetry data in one or more of the mock telemetry messages is inaccurate; and/or
wherein prior to transmitting the mock telemetry messages, the system is configured to generate the mock devices and register the mock devices with the application module; and the controller module is configured to determine the result of the load test is indicative of errors by reviewing reports generated from telemetry metrics, derived from telemetry logs received from the application module, wherein the telemetry logs identify the mock devices and associated ones of the mock telemetry messages received with the mock devices.

3. The system of claim 1 or 2, wherein the devices are elevator cars, escalators or movable walkways.

4. The system of any of claims 1 to 3, wherein, each one of mock telemetry messages contains mock telemetry data that identifies one of the mock devices associated with the one of the mock telemetry messages and a mock operational state of the one of the mock devices; and/or
wherein the system is configured to receive input that includes load test parameters; and perform the load test from the load test parameters.

5. The system of any of claims 1 to 4, wherein the load test parameters identifies one or more of:
a date and time to start the load test;
a duration for executing the load test;
a subgroup of the mock devices for generating the load test; and
the mock telemetry data to include in the mock telemetry messages.

6. The system of any of claims 1 to 5, wherein the subgroup of the mock devices is selected based on one or more of a device type and a device location.

7. The system of any of claims 1 to 6, wherein the system is configured to:
periodically retrieve a production telemetry metrics, representing a production load from a predetermined prior timeframe; and
perform the load test from the production telemetry metrics; and/or
wherein the system performs the load test by:
generating the mock devices representing the IoT devices that transmitted the production telemetry messages during the prior timeframe;
generating the mock telemetry messages representing the production telemetry messages generated by the IoT devices during the prior timeframe; and
transmitting the mock telemetry messages to the application module.

8. A method for simulating communication loads over a network, the method including:
a controller module executing a load test, by:
transmitting mock telemetry messages, associated with mock devices, representing internet-of-things (IoT) devices to an application module that is operationally coupled over the network to the controller module, wherein the mock telemetry messages are equivalent to production telemetry messages sent from the IoT devices; and
issuing an alert when the system determines that a result of the load test is indicative of errors above a threshold associated with receipt of the mock telemetry messages by the application module.

9. The method of claim 8, comprising identifying, by the system, errors by determining that one or more of the mock telemetry messages failed to reach the application module or that mock telemetry data in one or more of the mock telemetry messages is inaccurate; and/or
comprising, prior to transmitting the mock telemetry messages, generating, by the system, the mock devices and registering the mock devices with the application module; and determining the result of the load test is indicative of errors by reviewing reports generated from mock telemetry metrics, derived from telemetry logs received from the application module, wherein the telemetry logs identify the mock devices and associated ones of the mock telemetry messages received with the mock devices.

10. The method of claim 8 or 9, wherein the IoT devices are elevator cars, escalators or movable walkways.

11. The method of any of claims 8 to 10, comprising generating, by the system, for each one of mock telemetry messages, mock telemetry data that identifies one of the mock devices associated with the one of the mock telemetry messages and a mock operational state of the one of the mock devices.

12. The method of any of claims 8 to 11, comprising the system:
receiving input that includes load test parameters; and
performing the load test from the load test parameters.

13. The method of any of claims 8 to 12, wherein the load test parameters identifies one or more of:
a date and time to start the load test;
a duration for executing the load test;
a subgroup of the mock devices for the load test; and
the mock telemetry data to include in the mock telemetry messages.

14. The method of any of claims 8 to 13, wherein the subgroup of the devices is selected based on one or more of a device type and a device location; and/or
comprising the system periodically retrieving a production telemetry metrics representing a production load from a predetermined prior timeframe; and performing the load test from the production telemetry metrics.

15. The method of any of claims 8 to 14, comprising the system performing the load test by:
generating the mock devices representing the IoT devices that transmitted the production telemetry messages during the prior timeframe;
generating the mock telemetry messages representing the production telemetry messages generated by the IoT devices during the prior timeframe; and
transmitting the mock telemetry messages to the application module.
